Europäisches Patentamt

European Patent Office

Office européen des brevets

(11) Numéro de publication : **0 182 678**
**B1**

# (12) FASCICULE DE BREVET EUROPÉEN

(45) Date de publication du fascicule du brevet :
17.05.89

(21) Numéro de dépôt : 85401830.6

(22) Date de dépôt : 19.09.85

(51) Int. Cl.⁴ : **H 04 M 11/06, G 06 F 3/00**

(54) **Terminal de télé-informatique à extensions externes.**

(30) Priorité : 19.09.84 FR 8414379

(43) Date de publication de la demande :
28.05.86 Bulletin 86/22

(45) Mention de la délivrance du brevet :
17.05.89 Bulletin 89/20

(84) Etats contractants désignés :
BE DE GB IT NL

(56) Documents cités :
WO-A-82 /032 85
FR-A- 2 530 843
IBM TECHNICAL DISCLOSURE BULLETIN, vol. 19,
no. 7, décembre 1976, pages 2399-2401, New York,
US; W.W. BOYD: "Operator-specifiable communications setup parameters"
HEWLETT-PACKARD JOURNAL, vol. 33, no. 12,
décembre 1982, pages 3-7, Amstelveen, NL; J.T.
EATON et al.: "Extended memory and modularity are
added to the series 80 computer family"
COMPUTER DESIGN, vol. 23, no. 6, juin 1984, pages
61-64,66,67, Littleton, Massachusetts, US; A.M.
DAHOD: "Local network responds to changing system needs"
PROCEEDINGS 1982 INTERNATIONAL SYMPOSIUM
ON SUBSCRIBER LOOPS AND SERVICES, 20-24 septembre 1982, pages 45-49, New York, US; J.M. GRIF-
FITHS: "ISDN network terminating equipment"

(73) Titulaire : **MATRA COMMUNICATION**
**50, rue du Président Sadate**
**F-29101 Quimper (FR)**

(72) Inventeur : **Desbois, Alain**
**50, rue du Président Sadate**
**F-29101 Quimper (FR)**
Inventeur : **Palous, Jean-Claude**
**50, rue du Président Sadate**
**F-29101 Quimper (FR)**

(74) Mandataire : **Fort, Jacques et ai**
**CABINET PLASSERAUD 84, rue d'Amsterdam**
**F-75009 Paris (FR)**

## Description

L'invention concerne les terminaux de télé-informatique, prévus pour être reliés à un réseau de transmission de données, comportant une unité de calcul telle qu'un microprocesseur, des organes d'affichage et d'entrée et une mémoire contenant un programme résidant, reliés à un bus. Parmi les applications de l'invention, on peut citer les terminaux de Videotex qui sont largement diffusés à l'heure actuelle mais dont les possibilités se limitent à l'affichage sur écran ou au transfert sur imprimante d'informations transmises par le réseau en réponse à une demande formulée au clavier par un opérateur local. Mais cette application, si elle est particulièrement importante à l'heure actuelle, n'est nullement exclusive et peut, dans l'avenir, devenir mineure par rapport à d'autres.

Diverses considérations, et notamment des impératifs de coûts et de délais d'étude, ainsi que de prix de vente font que les terminaux de télé-informatique et de télématique commercialisés à l'heure actuelle sont figés et difficilement adaptables aux évolutions du marché. On peut considérer de tels appareils comme étant « fermés ». Ils ne peuvent accepter de nouvelles fonctions que moyennant une étude d'adaptation spécifique à chaque cas particulier.

On a cependant tenté d'étendre les possibilités d'un terminal de télé-informatique par enfichage d'une cartouche sur un connecteur dont est muni le terminal. En particulier, on a réalisé des modules enfichables d'extension de la capacité mémoire du terminal. Ces modules sont entièrement gérés par le processus interne du terminal de base et un logiciel qui lui est intégré. Il est indispensable que le module soit spécialement adapté au terminal, dont le logiciel doit connaître le module pour pouvoir le gérer suivant ses caractéristiques particulières. On a également proposé des modules enfichables d'extension de programmes. Mais ces programmes supplémentaires ne sont pas exécutés directement dans le module. Ils sont chargés par celui-ci en mémoire centrale du terminal avant exécution. Cette approche a l'inconvénient d'exiger une capacité mémoire supplémentaire du terminal. Enfin, dans la version la plus élaborée, on a proposé de connecter à un terminal des modules disposant de leur propre intelligence (y compris d'un processeur). Le processeur du module et celui du terminal doivent alors dialoguer suivant un protocole dont la présence exige une puissance de calcul supplémentaire.

De façon similaire, on a proposé de munir certains minicalculateurs, notamment des ordinateurs personnels, d'un connecteur permettant d'enficher une cartouche leur donnant des possibilités supplémentaires. Le document US-A-4 377 852 décrit par exemple un ordinateur domestique capable de recevoir un module constitué de mémoires mortes enfichables pour permettre son adaptation sur des réseaux de transmission de données, et en faire un terminal conforme au préambule de la revendication 1. Mais cette adaptation exige encore un emprunt des capacités de l'ordinateur.

L'invention vise à résoudre le problème de l'adjonction simple de fonctions supplémentaires à un terminal par connexion d'éléments externes gérés par le protocole original de gestion du terminal, la seule contrainte étant que chaque élément externe inséré soit identifiable par le protocole. On désignera par la suite cet élément externe par le terme de « module » pour plus de simplicité. Mais il doit être entendu que ce mot ne doit pas être pris dans le sens limitatif d'un boîtier enfichable contenant des mémoires mortes, mais comme désignant tout élément manipulable en bloc, enfichable sur un connecteur dont est équipé le terminal.

Pour arriver à ce résultat, l'invention transpose, au niveau du terminal, c'est-à-dire au niveau local, une conception déjà appliquée pour l'interconnexion de systèmes informatiques et téléinformatiques classiques, consistant en un modèle, établi par l'OSI, d'interconnexion à sept niveaux et à la recherche d'une normalisation sur le nombre de niveaux le plus élevé possible à partir du bas. Mais cette normalisation est obtenue par des moyens matériels et logiciels qui sont très différents de ceux mis en œuvre pour la normalisation de protocole suivant le modèle ISO pour systèmes ouverts et qui n'apparaissent normalement pas à l'homme du métier.

A partir de cette approche, l'invention propose un terminal inter-actif conforme à la revendication 1.

Du point de vue matériel, le connecteur (ou chaque connecteur) est avantageusement placé dans un logement prévu dans le boîtier du terminal, protégé par une porte basculante, la connexion physique s'effectuant par l'intermédiaire d'un connecteur à force d'insertion réduite. Le terminal est avantageusement prévu pour recevoir deux modules reliés chacun à l'appareil par l'intermédiaire d'un connecteur.

Le protocole de gestion des modules externes est incorporé à un moniteur d'aiguillage qui permet au terminal de prendre en compte aussi bien les modules externes que les modules internes du terminal. De ce fait, chaque module externe peut dialoguer avec tout module interne ou avec l'autre module externe. Il est également à même de se substituer, aussi bien du point de vue matériel que du point de vue logiciel, à l'un quelconque des modules internes. Le protocole de gestion des modules externes assure la compatibilité entre ces modules et le terminal, ce qui autorise la connexion d'un module externe prévu pour la mise en œuvre de l'invention sur l'un quelconque des terminaux ouverts, appartenant à des familles différentes, équipés d'un tel moniteur.

Comme cela a été indiqué plus haut, le protocole de gestion des modules externes doit assurer des services que l'on peut assimiler aux six premiers niveaux de la normalisation ISO, dans le but de permettre la communication au septième niveau (niveau application). Il n'est pas nécessaires de décrire ici la normalisation OSI, du fait qu'elle est bien connue. En cas de besoin, on pourra cependant se reporter à des documents résumant cette normalisation, par exemple à « Protocol standardization works its way up the ladder of the OSI model », ELECTRONICS, 14 juin 1984, pp. 148-151.

Dans le cas de la mise en œuvre de l'invention, les niveaux 1 à 6 du modèle OSI correspondent aux fonctions suivantes :

Niveau 1 (niveau physique) : établi sur le bus du terminal, complété par une extension.

Niveau 2 (niveau liaison) : procédure de transfert de l'information sur ce bus.

Niveau 3 (niveau réseau) : routage et mise en relation logique de plusieurs équipements de péri-informatique.

Niveau 4 (niveau transport) : sécurité des échanges d'information.

Niveau 5 (niveau session) : négociation des différents services inclus dans les sous-ensembles logiques de la périphérie.

Niveau 6 (niveau présentation) : définition des formats et protocoles de choix de ces formats par le niveau 7 (application).

Grâce à cette disposition, il devient possible d'interconnecter soit des équipements disposant de leur propre intelligence, notamment d'un organe de calcul, soit des équipements utilisant l'intelligence d'un autre équipement, notamment celle du terminal.

L'invention sera mieux comprise à la lecture de la description qui suit d'un mode particulier d'exécution de l'invention, donné à titre d'exemple non limitatif. La description se réfère aux dessins qui l'accompagnent, dans lesquels :

— la Figure 1 est un schéma synoptique montrant l'architecture matérielle du terminal,

— la Figure 2 est un synoptique du système d'aiguillage du terminal,

— la Figure 3 est un schéma d'organisation d'un module logiciel interne du système d'aiguillage de la Figure 2,

— la Figure 4 est un logigramme faisant apparaître la gestion du protocole de communication,

— les Figures 5 à 9 sont des logigrammes indiquant les opérations effectuées aux différents niveaux du protocole de communication,

— la Figure 10 est un schéma d'organisation de module externe.

L'invention sera maintenant décrite dans son application à un terminal de Videotex qui peut par exemple être celui commercialisé par la demanderesse sous la dénomination « Minitel ».

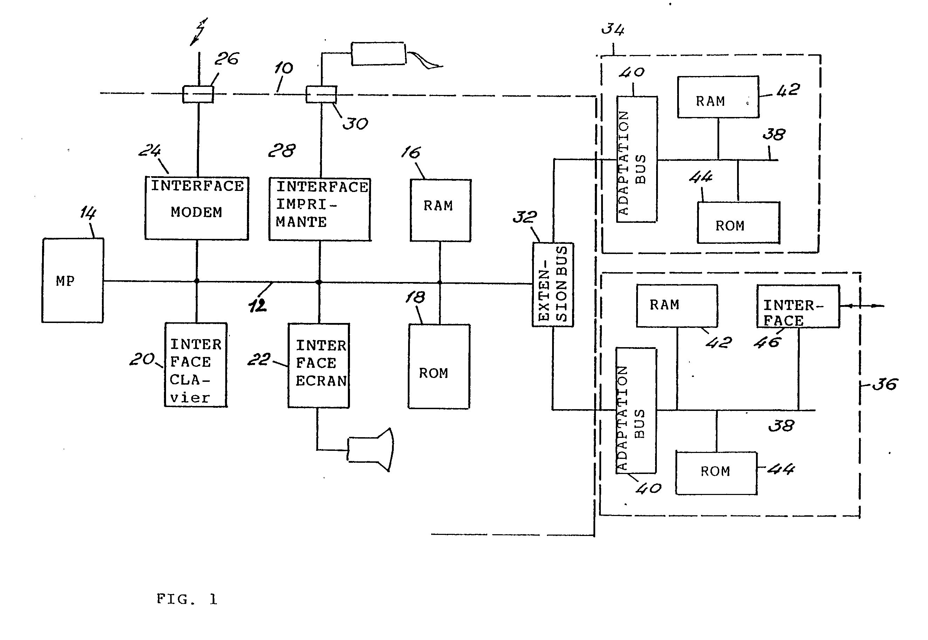

Un tel terminal a la constitution matérielle d'ensemble montrée en Figure 1. Le terminal 10 comporte un bus 12 auquel sont reliés un microprocesseur 14, des interfaces et des mémoires vives 16 et mortes 18. Les interfaces représentés comprennent un interface de clavier 20, un interface d'écran 22, un interface modem 24 de liaison avec une ligne de transmission par l'intermédiaire d'un connecteur 26 et un interface 28 de liaison avec une imprimante par l'intermédiaire d'un connecteur 30. D'autres interfaces peuvent être prévus, par exemple pour les liaisons avec une ligne téléphonique.

La mise en œuvre de l'invention sur un terminal 10 de ce type implique des modification de l'architecture matérielle et de l'organisation logicielle.

L'architecture doit être telle que le terminal constitue un système ouvert ou évolutif, pouvant accueillir des modules externes correspondant à des fonctions variées. Pour cela, le terminal comporte un dispositif d'adaptation dont l'organe essentiel est une extension 32 du bus 12.

Dans le cas illustré, l'extension 32 est prévue pour permettre au terminal de recevoir au plus deux modules externes, qu'on appellera modules 1 et 2, suivant le connecteur sur lequel ils sont branchés. Chacun des modules externes comporte un bus 38 et un circuit 40 d'adaptation au bus interne 12 du terminal. Les modules externes peuvent, pour le reste, avoir des constitutions très variées. Sur la Figure 1, le module externe 1 est constitué par un module 34 qui comporte uniquement une mémoire vive de données 42 et une mémoire morte de programme 44. Le module externe 2 est constitué par un module 36 qui comporte de plus un interface 46 de liaison avec une unité de disquettes.

L'organisation logicielle du terminal doit permettre au microprocesseur 14 de voir de la même façon le logiciel interne au terminal et le logiciel déporté dans les modules externes 1 et 2. Il faut en outre que cette organisation évite les perturbations du fonctionnement du logiciel interne par le logiciel externe. Pour cela, le logiciel interne d'un terminal fermé doit être complété par un protocole de gestion des modules externes qui a pour fonctions :

— d'accueillir les modules externes,

— d'assurer la sécurité du terminal en cas de conflit ou de défaut de fonctionnement,

— de faciliter l'acheminement des informations,

— de s'interfacer avec les protocoles internes du terminal,

— de banaliser les modules externes afin de les rendre compatibles avec tous les terminaux ouverts conforme à l'invention.

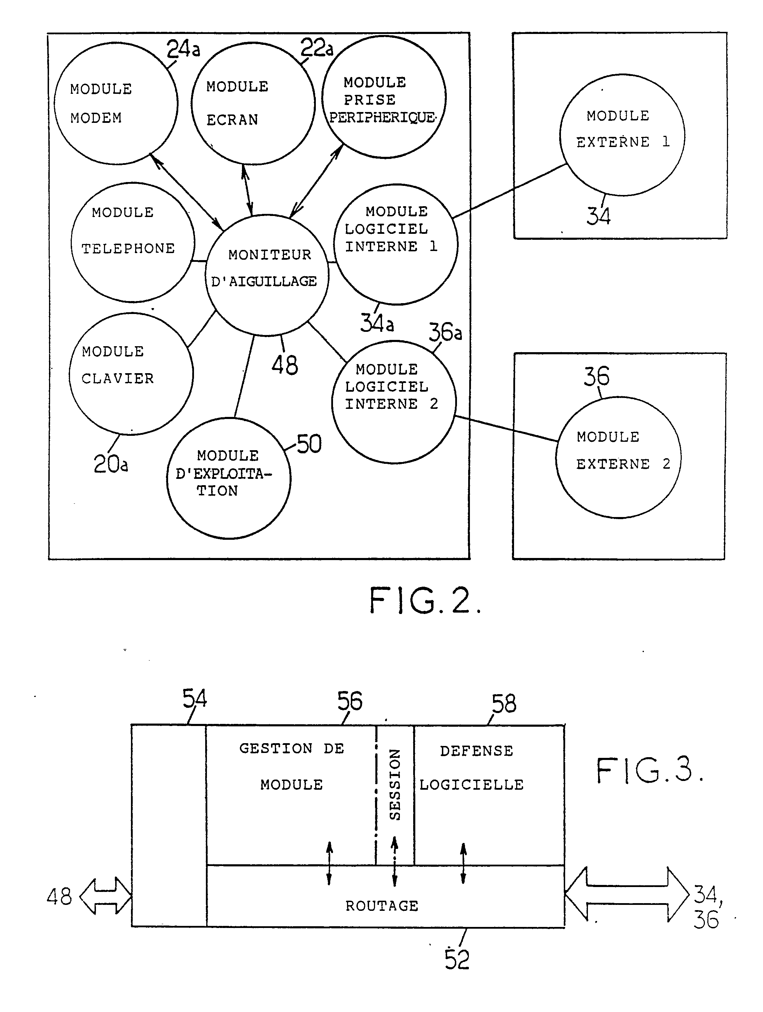

Ce protocole apparaît dans l'organisation logicielle du terminal (Figure 2) comme un moniteur d'aiguillage 48 permettant de prendre en compte tous les modules pour leur permettre de dialoguer ou pour permettre à un module externe de se substituer à un module interne.

Le principe mis en œuvre dans la structure logique est de scinder les modules physiques en autant de modules logiques dont chacun peut dialoguer avec l'un quelconque des autres par l'intermédiaire du moniteur d'aiguillage 48. Toutefois, ce raisonnement ne s'étend pas obligatoirement aux modules externes. Sur la Figure 2, chacun des modules logiciels est désigné par la même référence que le module physique correspondant, affecté de l'indice a. Seul le module d'exploitation 50 ne correspond pas à une entité physique particulière : il est constitué par le logiciel d'application du terminal, comportant notamment un répertoire des fonctions. On pourrait aussi bien affecter un module logiciel interne unique aux deux modules externes, dont le nombre peut d'ailleurs être augmenté. Dans ce cas, le module logiciel sert à l'établissement et à la rupture des sessions (communications) entre les modules externes.

Le moniteur d'aiguillage 48 dispose d'une table d'aiguillage mémorisant les différents chemins virtuels à établir entre les modules. La table dispose de valeurs permettant au système de démarrer en cas de défaut d'initialisation. Ultérieurement, chaque module qui veut dialoguer avec un autre module doit faire, au moniteur d'aiguillage 48, une demande d'établissement de connexion, sauf si la connexion a précédemment été établie. Le dialogue ne commence qu'après acquittement de la demande au moniteur, la première requête étant orientée de l'émetteur vers le récepteur d'information.

Chacun des modules externes destinés à être connectés au terminal doit comporter un interface logiciel d'adaptation interne correspondant au terminal 10. En conséquence, chaque module externe doit disposer d'un minimum de logiciel d'interface et d'une table d'interface avec le module logiciel interne, constitué par une table implantée à une adresse fixe dans tous les modules externes. Cette table permet au terminal 10 de reconnaître le module externe, de l'accepter et, éventuellement, de l'activer, comme on le verra plus loin en détail.

Chacun des modules logiciels internes 34a, 36a peut être regardé comme constitué de trois sous-ensembles fonctionnels, comme indiqué sur la Figure 3. Si un seul module logiciel interne est prévu, il comporte de plus un sous-ensemble « session ». L'ensemble de routage 52 est destiné uniquement à transmettre les informations reçues d'un module à un autre module (destinataire), par l'intermédiaire d'un adaptateur 54 (destinataire), par l'intermédiaire d'un adaptateur 54 (niveau présentation). Cet ensemble de routage fait appel à l'ensemble de gestion de module 56 lorsque les informations reçues sont destinées au module logiciel interne lui-même et à l'ensemble de défense logicielle 58 pour traiter les cas d'erreur. L'ensemble de gestion 56 a pour fonction de mettre en service ou hors service le module externe associé, d'accepter ou de refuser ce module externe. L'ensemble de défense logicielle 58 centralise tous les cas d'erreur et active le traitement correspondant, qui peut être de nature très variée et notamment s'étendre de la non prise en compte de l'erreur jusqu'au redémarrage du terminal 10. L'ensemble de session, dans le cas d'un module unique, a notamment pour rôle d'organiser les dialogues et d'activer l'application prévue (éventuellement par l'intermédiaire de la présentation). La Figure 3 montre en traits mixtes un tel sous-ensemble supplémentaire de session.

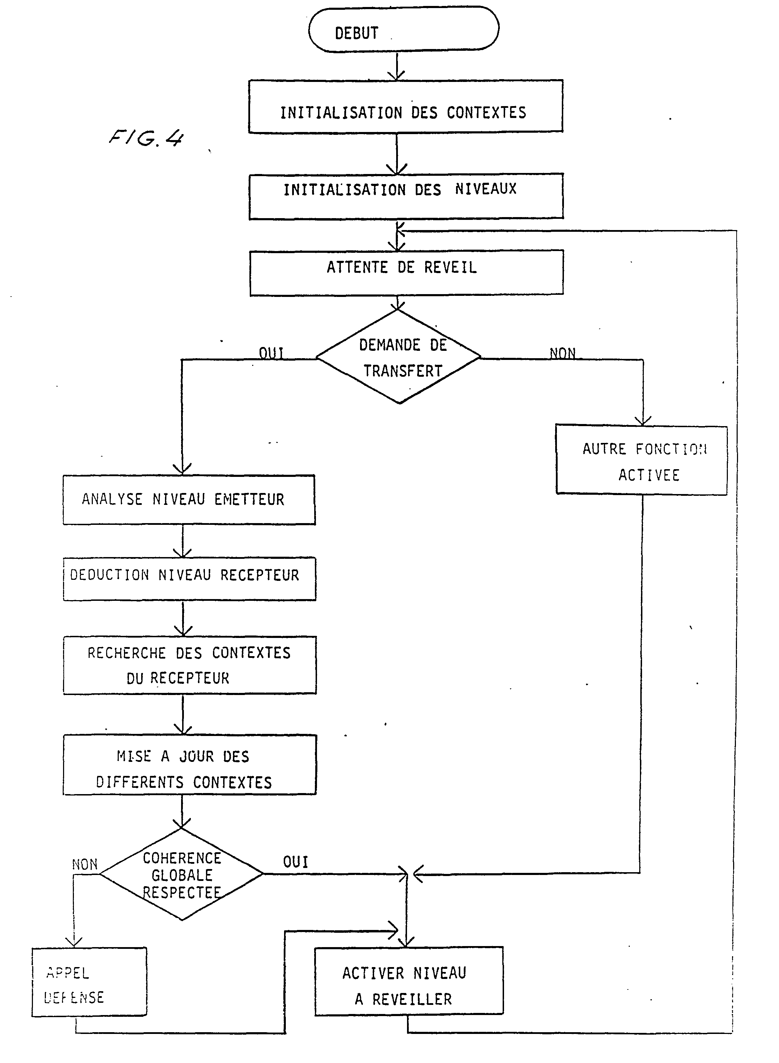

Le protocole de gestion des modules externes peut ainsi assurer la compatibilité entre ces modules et le terminal. Le protocole dans son ensemble peut être regardé comme articulé en six niveaux dont le premier est classiquement constitué par la liaison physique, chaque niveau pouvant dialoguer avec les niveaux immédiatement précédent et suivant, une information reçue étant véhiculée dans le sens montant et une information émise dans le sens descendant. Le cheminement d'information réalisé apparaît sur les Figures 4 à 9 dans le cas d'une réception (c'est-à-dire du niveau 1 au niveau 7).

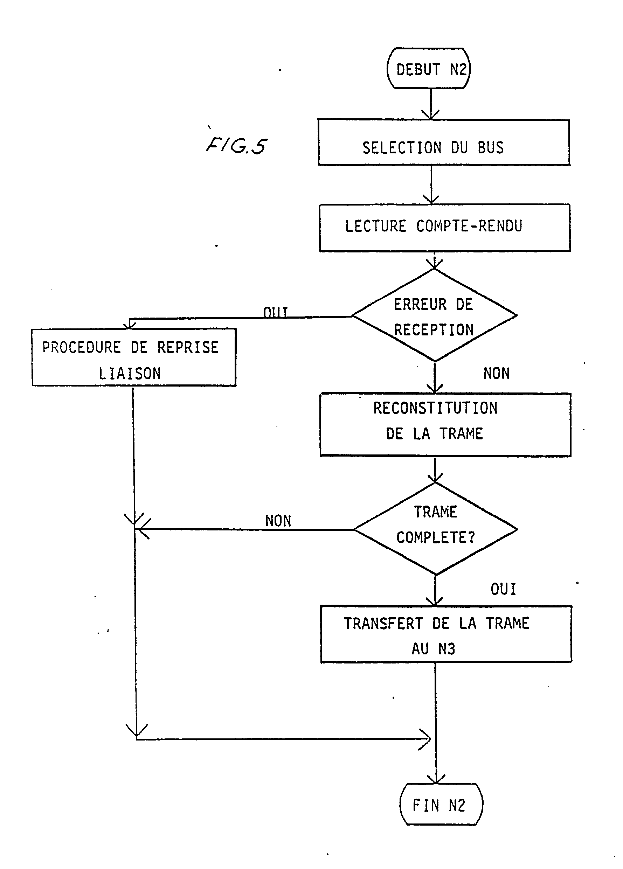

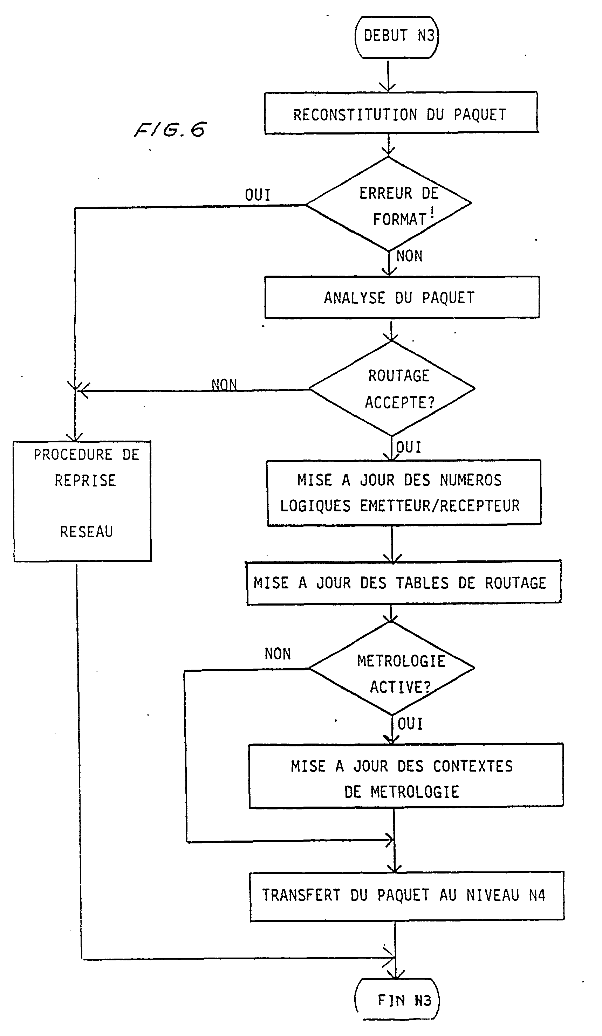

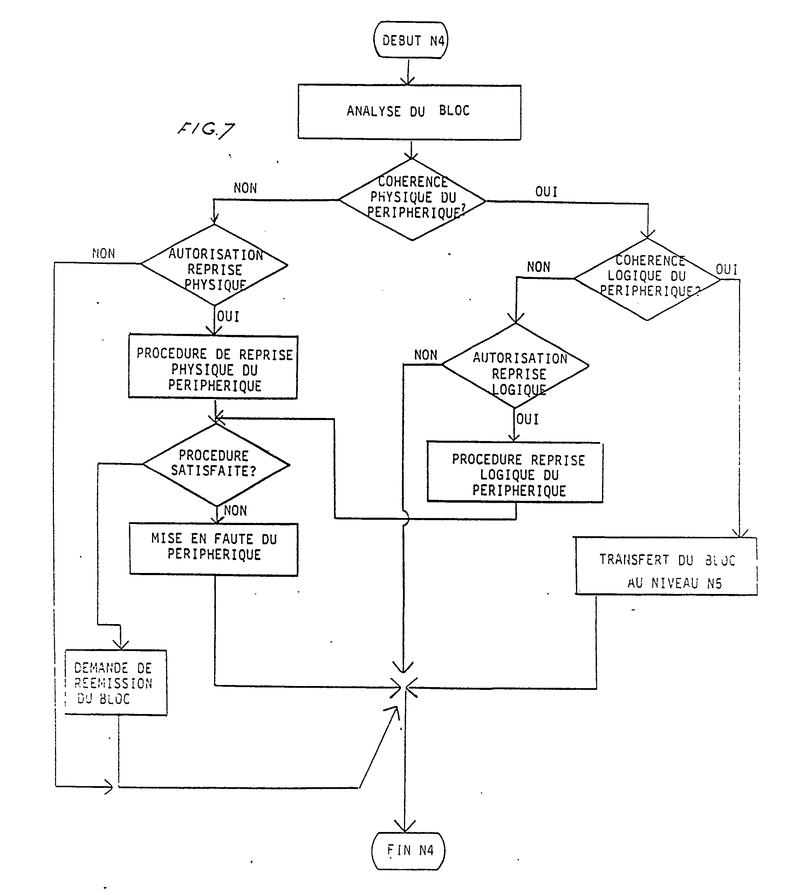

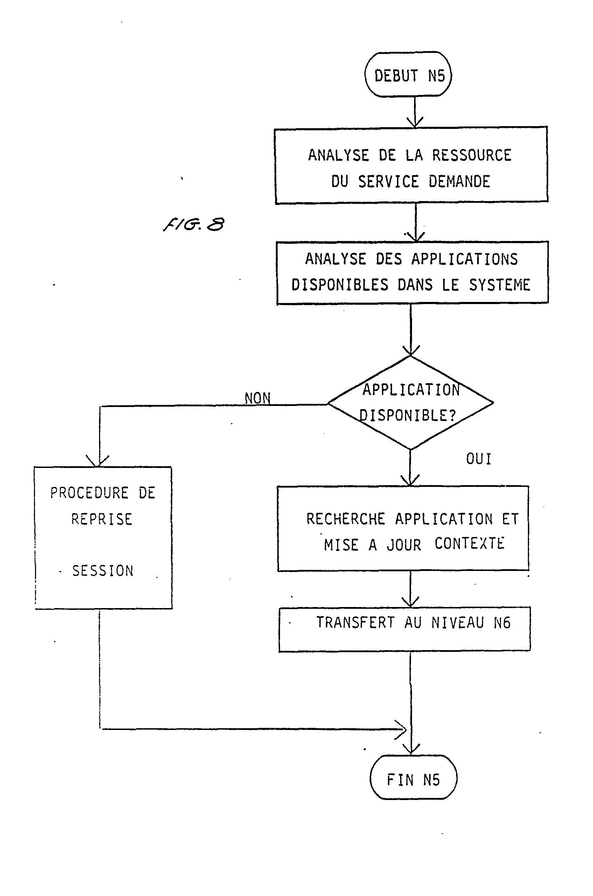

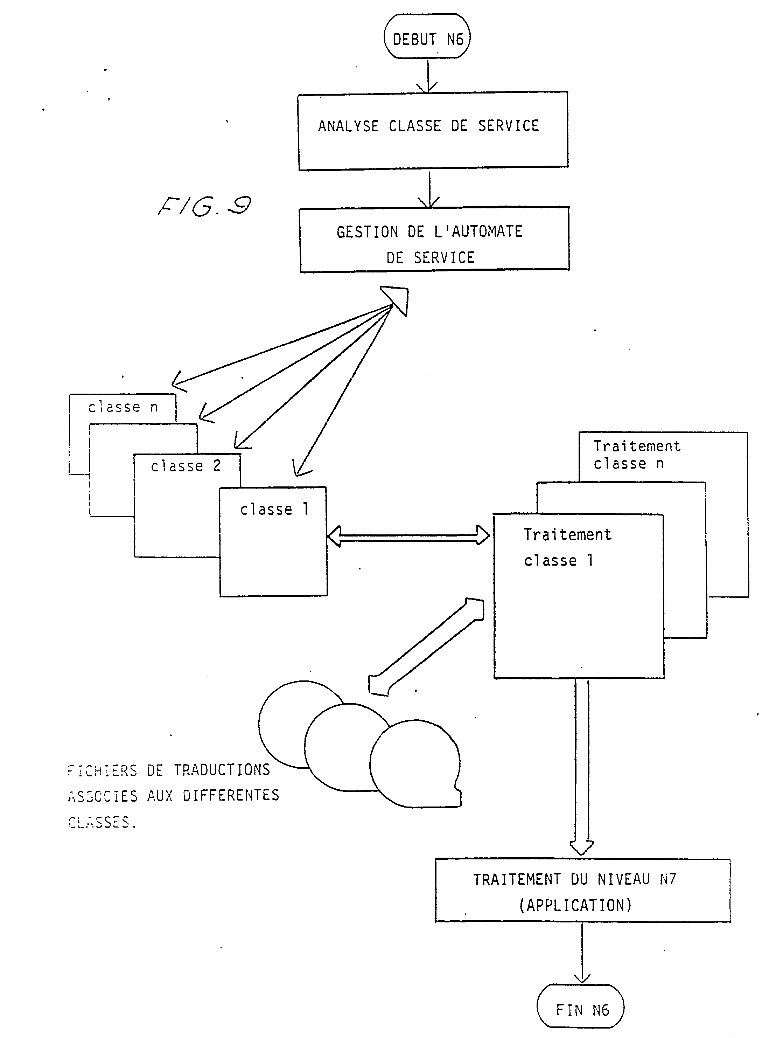

La Figure 4 est un logigramme faisant apparaître les fonctions du logiciel de base ayant pour rôle d'acheminer et d'activer les niveaux successifs. Les Figures 5 et 6 montrent le déroulement aux niveaux N2 (liaison) et N3 (réseau) dans le cas d'une transmission d'information suivant la procédure par paquets. Les Figures 7 et 8 correspondent aux niveaux N4 (transport) et N5 (session) et font apparaître des fonctions telles que des vérifications qui seront analysées plus loin. Enfin, la Figure 9 indique les opérations qui interviennent au niveau N6 (présentation). Ces opérations consistent en une analyse de la classe de service requis et en une gestion de l'automate de service qui sélectionne, en fonction de la classe identifiée, le traitement approprié avant de provoquer son exécution sur la base d'un fichier de traduction mémorisé, correspondant à la classe identifiée.

Dans le cadre de ce protocole, on décrira maintenant de façon brève la façon dont s'effectue la connexion des modules externes, leur mise en service, leur initialisation, leur exploitation et leur mise hors service.

Mise en service et initialisation d'un module externe

La mise en service d'un module externe 1 ou 2 est réalisable soit par ce module externe lui-même, soit par une commande introduite par l'opérateur à l'aide du clavier, soit par une commande émanant du système, c'est-à-dire d'un autre module interne ou externe.

Le module logiciel interne correspondant au module externe qui a été inséré est réveillé par la réception d'un bloc de demande de mise en service du module externe associé. Avant d'activer ce module externe, le module logiciel interne vérifie plusieurs paramètres :

— présence effective du module externe : cette présence effective peut être indiquée par une information fournie par le connecteur de réception du module externe. En cas d'absence du module externe, le module logiciel interne active son module de défense 58 (Figure 3) avec le code correspondant à l'absence de module externe à l'initialisation ;

— module externe en état « hors service » : pour demander la mise en service d'un module externe, il est nécessaire que l'état précédent de ce module soit « hors service ». Si ce n'est pas le cas, il y a encore appel du module de défense logicielle 58 avec le code approprié ;

— sélection du démarrage autorisée, de façon automatique, sur commande du système ou sur commande au clavier ;

— acceptation du module externe par le terminal : pour cela, au terminal et à chaque module externe est affecté un niveau logique. Le terminal ne doit accepter de travailler avec le module externe que si celui-ci a un numéro de logique inférieur à celui du terminal. Le numéro logique du terminal est contenu dans une mémoire morte ou sauvegarde, modifiable par une commande d'exploitation spécifique ;

— acceptation du module externe par l'autre module externe, s'il est déjà en place : en effet, l'introduction d'un module externe dans le terminal peut être incompatible avec un module externe présent à l'autre emplacement de réception. Cette incompatibilité peut être décelée dans la mesure où chaque module externe comporte un numéro de type introduit dans son bloc moniteur et un masque d'acceptation ou de refus des autres types de module externe.

Par exemple, un cas d'incompatibilité est celui où l'un des modules externes est un compilateur FORTRAN 4 tandis que l'autre est un module interpréteur BASIC. Par contre, chacun de ces modules pourra travailler avec un module externe calendrier.

— vérification de clé d'accès, si celle-ci existe. Pour réserver l'utilisation d'un module externe à des personnes autorisées, ce module peut comporter une clé d'accès placée dans le bloc moniteur en mémoire morte ou en mémoire vive sauvegardée. Le module logiciel interne correspondant vérifie alors la concordance de la clé d'accès frappée par l'opérateur sur le clavier avec la clé présente dans le module externe. En cas de divergence, il y a intervention du module de défense logiciel.

Exploitation du module externe

Une fois le module logiciel interne 34a ou 36a initialisé, son rôle devient transparent au long du déroulement de l'application. C'est le module externe 34 ou 36 gère son application, notamment par dialogue avec les autres modules et positionnement d'aiguillages.

En particulier, le module externe 34 ou 36 peut demander au module clavier 20a de lui affecter des touches de fonctions banalisées pour sa propre exploitation, au module écran 22a d'afficher ses messages, etc.

Le module logiciel interne ne redevient effectivement actif que s'il reçoit une commande d'exploitation le concernant, telle que demande de mise hors service.

Mise hors service d'un module externe

La mise hors service peut intervenir par une commande système, par une commande introduite par l'opérateur, par retrait du module ou par fin de traitement, le module externe intervenant alors lui-même. Cette mise hors service doit être validée de la même façon que la mise en service.

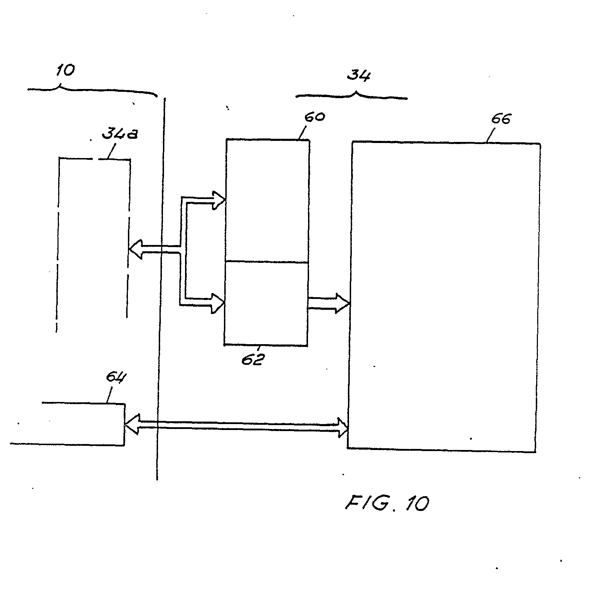

La structure physique d'un module externe dépend notamment de l'application qu'il supporte. Cependant, ce module comportera toujours au minimum une zone de mémoire non volatile (mémoire morte ou mémoire vive sauvegardée), implantée à une adresse fixe, contenant une table d'identification et une zone de déroulement vers les programmes. La Figure 10 montre schématiquement l'organisation correspondante. La table d'identification 60, implantée à la même adresse dans tous les modules externes, permet au terminal de reconnaître le type de cartouche connectée et de déceler l'incompatibilité éventuelle de cette cartouche avec une autre cartouche implantée sur le terminal. Cette table peut comporter notamment un numéro logique de cartouche, l'indication du type et un masque d'acceptation et de refus.

La zone de déroutement 62, placée physiquement à une adresse fixe et contiguë à la table d'identification 60, permet au module logiciel interne 34a d'activer les traitements d'initialisation, d'application, de mise hors service et d'interruption de la cartouche.

Pour permettre l'acheminement des informations entre le terminal 10 et le module externe 34, deux tampons, servant l'un à la réception et l'autre à l'émission, indiqués en 64 sur la Figure 10, sont communs au module externe 34 et au module logiciel interne 34a. Ces tampons sont utilisés par le module d'aiguillage et sont définis à une adresse fixe dans le terminal pour être accessibles par le module externe.

Enfin, le module externe contient une zone d'application 66 qui dépend directement du type d'application supporté. La structure générale de toutes les applications reste néanmoins commune pour permettre de l'interfacer avec le module logiciel interne correspondant.

L'invention est susceptible de très nombreuses applications. Sans que cette énumération soit limitative, on peut indiquer quelques classes d'application qui apparaissent comme importantes et peuvent directement être envisagées avec des modifications relativement réduites de terminaux Videotex existants.

— Application privée locale : agenda, jeux, bibliothèque de programmes de gestion (tels que les programmes du genre désigné par la marque « Visicalc »), éditeur de textes, ...

— Application privée en mode connecté au réseau téléphonique : agenda avec numérotation automatique, dialogue de terminal à terminal par l'intermédiaire du réseau téléphonique, messagerie, carte de crédit.

— Application dans l'entreprise : dialogue entre terminaux par l'intermédiaire d'un autocommutateur privé ou PABX appartenant à l'entreprise.

— Application sur système télé-informatique ou télématique : interfaces série asynchrone, interfaces série synchrone, interfaces parallèle, adaptation de nouveaux périphériques.

L'invention ne se limite pas aux modes particuliers de réalisation qui ont été envisagés et décrits. Elle s'étend à l'ensemble des variantes restant dans le cadre des équivalences. Au surplus, il doit être entendu que la portée du présent brevet s'étend non seulement au terminal en lui-même, mais aussi aux organes spécialement destinés à l'adapter ou à s'y adapter, et notamment aux modules externes agencés de façon à être associés à un tel terminal.

## Revendications

1. Terminal de télé-informatique comportant une unité de calcul telle qu'un microprocesseur, des organes d'affichage et d'entrée et une mémoire (18) de programme résident, reliés à un bus interne (12), ainsi qu'un dispositif (32) d'extension du bus interne (12) vers au moins un accès associé à un connecteur de réception de module externe (34, 36) caractérisé en ce qu'il comporte, en mémoire de programme résident : un protocole de gestion de module externe, interfaçable avec les protocoles internes (20a-22a, 24a, 34a, 36a, 50) du terminal (10) et permettant d'accueillir chacun de plusieurs modules externes et de le rendre compatible avec le terminal ; et un module logiciel interne (34a, 36a) relié au dispositif d'extension (32), ayant une zone de routage (52) destinée à transmettre les informations reçues d'un module à un autre module et ayant une zone (56) de gestion de module externe constituée de façon à vérifier des données contenues dans le module externe connecté et à accepter ou refuser le module externe connecté ainsi que de le mettre en service ou hors service.

2. Terminal selon la revendication 1, caractérisé en ce qu'il comprend au moins deux accès prévus chacun pour recevoir un module externe.

3. Terminal selon la revendication 2, caractérisé en ce que le module logiciel interne (34a, 36a) est prévu pour détecter les incompatibilités entre les modules externes connectés.

4. Terminal selon la revendication 1, caractérisé en ce que le protocole de gestion de modules externes est incorporé à un moniteur d'aiguillage (48) permettant au terminal (10) de prendre en compte aussi bien les modules externes (34, 36) que les modules internes du terminal, de façon que chaque module externe puisse dialoguer avec tout module interne ou avec un autre module externe éventuel.

5. Terminal selon la revendication 2, caractérisé en ce que chaque accès est associé à un module logiciel interne (34a, 36a) comportant, en plus de la zone (56) de gestion du module externe et de la zone de routage (52), une zone de défense logicielle (58) destinée à activer les traitements d'erreur.

6. Terminal selon l'une quelconque des revendications précédentes caractérisé en ce que chaque module comporte une zone de mémoire non volatile implantée à une adresse identique dans tous les modules destinés à être associés au terminal et contenant une table (60) d'identification du module.

7. Terminal selon la revendication 6, caractérisé en ce que la zone de mémoire non volatile de chaque module externe contient également une zone de déroutement (62) placée physiquement à une adresse fixe et contiguë à celle de la table d'identification (60) pour activer les traitements d'initialisation, d'application, de mise hors service et d'interruption du module.

8. Terminal selon l'une quelconque des revendications précédentes, caractérisé en ce que le dispositif (32) d'extension du bus interne comprend deux tampons (64) ayant une adresse fixe dans le terminal, utilisés en commun par le module externe (34) et le module du logiciel interne correspondant (34a) pour l'acheminement des informations entre le terminal et le module externe connectable (34, 36).

9. Terminal selon l'une quelconque des revendications précédentes, caractérisé en ce qu'il comprend des moyens d'entrée/sortie destinés à le relier à une ligne téléphonique pour lui donner les fonctions d'un terminal de videotex.

## Claims

1. Remote data processing terminal comprising a processing unit, such as a microprocessor, means for display and input, and a resident program memory (18) which are connected to an internal bus (12) as well as a device (32) for extension of the internal bus (12) to at least one port associated with a connector for receiving an external module (34, 36), characterized in that it comprises, within the resident program memory : an external module handling protocol which can be interfaced with the internal protocols (20a-22a, 24a, 34a, 36a, 50) of the terminal (10) and which may receive each of a plurality of external modules and achieve compatibility thereof with the terminal ; and an internal software module (34a, 36a) connected to the extension device (32), having a routing zone (52) for transmitting information received from one module to another module and having an external module handling zone (56) arranged for checking data contained in the connected external module and to accept or refuse the connected external module and for switching the module in or out.

2. Terminal according to claim 1, characterized in that it comprises at least two ports each arranged for receiving an external module.

3. Terminal according to claim 2, characterized in that the internal software module (34a, 36a) is arranged for detecting lacks of compatibility between the connected external modules.

4. Terminal according to claim 1, characterized in that the external module handling protocol is implemented in a switching monitor (48) arranged for supporting capability of the terminal (10) to accept external modules (34, 36) as well as internal modules of the terminal, whereby each external module may dialog with any internal module or possibly with another external module.

5. Terminal according to claim 2, characterized in that each port is associated with an internal software module (34a, 36a) comprising, in addition to the zone (56) for handling the external module and to the routing zone (52), a software defense zone (58) for activating error processing.

6. Terminal according to any one of the preceding claims, characterized in that each module has a non-volatile memory zone located at the same address in all modules provided for association with the terminal, containing a module identification table (60).

7. Terminal according to claim 6, characterized in that the non-volatile memory zone of each external module further includes an off-routing zone (62) physically located at a fixed address adjacent to the address of the identification table (60) for activating the processing steps required for initialization, application, de-energization and interruption of the module.

8. Terminal according to any one of the preceding claims, characterized in that the internal bus extension device (32) comprises two buffers (64) having a fixed address in the terminal, commonly used by the external module (34) and the corresponding internal software module (34a) for routing information between the terminal and the connectable external module (34, 36).

9. Terminal according to any one of the preceding claims, characterized in that it further comprises input/output means for connection to a telephone line for providing the terminal with the capabilities of a videotex terminal.

**Patentansprüche**

1. Fernverarbeitungsterminal mit einer Recheneinheit, wie einem Mikroprozessor, Anzeigeeinrichtungen, Eingabeeinrichtungen und einem inneren Programmspeicher (18), welcher mit einem inneren Bus (12) verbunden ist, und auch mit einer Anschlußvorrichtung (32) für den inneren Bus (12) zu wenigstens einem Zugang, welcher mit einem Empfangsverbindungsstück eines externen Moduls (34, 36) verbunden ist, dadurch gekennzeichnet, daß es im inneren Programmspeicher ein Verwaltungsprotokoll eines externen Moduls, welches mit internen Protokollen (20a-22a, 24a, 34a, 36a, 50) des Terminals (10) verbindbar ist und jedes der mehreren externen Module zu empfangen und davon kompatibel mit dem Terminal darzustellen erlaubt, und ein internes Logikmodul (34a) aufweist, das mit der Anschlußvorrichtung (32) verbunden ist, eine Sortierzone (52) zum Übertragen von Informationen, die von einem Modul mit einem anderen Modul erhalten werden, und eine Verwaltungszone (56) eines externen Moduls aufweist, welches zum Kontrollieren der erhaltenen Daten in dem angeschlossenen externen Modul und zum Annehmen oder Zurückweisen des angeschlossenen externen Moduls zum Einsatz im Betrieb oder Außentrieb vorgesehen ist.

2. Terminal nach Anspruch 1, gekennzeichnet durch wenigstens zwei Zugänge, welche jeweils zum Empfang eines externen Moduls vorgesehen sind.

3. Terminal nach Anspruch 2, dadurch gekennzeichnet, daß das interne Logikmodul (34a, 36a) zum Entdecken von Inkompatibilitäten zwischen den verbundenen externen Modulen vorgesehen ist.

4. Terminal nach Anspruch 1, dadurch gekennzeichnet, daß das Verwaltungsprotokoll der externen Module in einen Stellmonitor (48) integriert ist, welcher mit dem Terminal (10) die externen Module (34, 36) wie die internen Module des Terminals zu berücksichtigen erlaubt, derard, daß jedes externe Modul mit jedem internen Modul oder mit einem anderen etwaigen externen Modul wirkmäßig verbindbar ist.

5. Terminal nach Anspruch 2, dadurch gekennzeichnet, daß jeder Zugang mit einem internen Logikmodul (34a, 36a) verbunden ist, welches neben der Verwaltungszone (56) eines externen Moduls und der Sortierzone (52) eine logische Abwehrzone (58) zur Aktivierung von Fehlerbearbeitungen aufweist.

6. Vorrichtung nach Anspruch 1 oder einem der folgenden, dadurch gekennzeichnet, daß jedes Modul eine gesicherte Speicherzone aufweist, die in allen Modulen mit derselben Adresse zur Verbindung mit dem Terminal implantiert ist und eine Tabelle (60) zur Identifizierung des Moduls enthält.

7. Terminal nach Anspruch 6, dadurch gekennzeichnet, daß die gesicherte Speicherzone jedes externen Moduls gleichzeitig eine Kursänderungszone (62) enthält, welche physikalisch an einer festen und zu der der Identifizierungstabelle (60) benachbarten Adresse angeordnet und zur Aktivierung der Vorgänge zur Initialisierung, zur Anwendung, zum Außendiensteinsatz und zur Modulunterbrechung vorgesehen ist.

8. Terminal nach Anspruch 1 oder einem der folgenden, dadurch gekennzeichnet, daß die Anschlußvorrichtung (32) des internen Busses zwei Puffer (64) umfaßt, die eine feste Adresse im Terminal haben und gemeinsam von dem externen Modul (34) und dem entsprechenden internen Logikmodul (34a) zur Weiterleitung von Informationen zwischen dem Terminal und dem verbindbaren externen Modul (34, 36) gebraucht werden.

9. Terminal nach Anspruch 1 oder einem der folgenden, dadurch gekennzeichnet, daß es Eingangs- und Ausgangseinrichtungen zum Anschluß an eine Telefonleitung für ein Videotextterminal aufweist.

FIG. 1

EP 0 182 678 B1

FIG.2.

FIG.3.

**EP 0 182 678 B1**

FIG. 4

DEBUT

INITIALISATION DES CONTEXTES

INITIALISATION DES NIVEAUX

ATTENTE DE REVEIL

DEMANDE DE TRANSFERT

OUI — NON

AUTRE FONCTION ACTIVEE

ANALYSE NIVEAU EMETTEUR

DEDUCTION NIVEAU RECEPTEUR

RECHERCHE DES CONTEXTES DU RECEPTEUR

MISE A JOUR DES DIFFERENTS CONTEXTES

COHERENCE GLOBALE RESPECTEE

NON — OUI

APPEL DEFENSE

ACTIVER NIVEAU A REVEILLER

3

FIG.5

```
                                    ┌─────────────┐
                                    │  DEBUT N2   │
                                    └──────┬──────┘
                                           │
                                           ▼
                              ┌────────────────────────┐
                              │    SELECTION DU BUS     │
                              └────────────┬───────────┘
                                           │
                                           ▼
                              ┌────────────────────────┐
                              │  LECTURE COMPTE-RENDU   │
                              └────────────┬───────────┘
                                           │
                                           ▼
                 OUI              ┌─────────────────┐
        ┌─────────────────────────┤   ERREUR DE     │
        │                         │   RECEPTION     │
        ▼                         └────────┬────────┘
┌──────────────────────┐                  │ NON
│ PROCEDURE DE REPRISE  │                  ▼
│      LIAISON          │      ┌────────────────────────┐
└──────────┬───────────┘      │    RECONSTITUTION       │
           │                  │     DE LA TRAME         │
           │                  └────────────┬───────────┘
           │                               │
           │         NON         ┌─────────────────┐
           ◄─────────────────────┤     TRAME       │
           │                     │   COMPLETE?     │
           │                     └────────┬────────┘
           │                              │ OUI
           │                  ┌────────────────────────┐
           │                  │  TRANSFERT DE LA TRAME  │
           │                  │        AU N3            │
           │                  └────────────┬───────────┘
           │                               │
           └──────────────────────────────┤
                                           ▼
                                    ┌─────────────┐
                                    │   FIN N2    │
                                    └─────────────┘
```

*FIG.6*

```
                         ( DEBUT N3 )
                              │
                              ▼
                  ┌───────────────────────────┐
                  │  RECONSTITUTION DU PAQUET  │
                  └───────────────────────────┘
                              │
                              ▼
        OUI                ╱ERREUR DE╲
   ◄───────────────────────  FORMAT!  ╲
                           ╲         ╱
                              │ NON
                              ▼
                  ┌───────────────────────────┐
                  │      ANALYSE DU PAQUET     │
                  └───────────────────────────┘
                              │
                              ▼
          NON              ╱ ROUTAGE ╲
   ◄────────────────────── ╲ ACCEPTE?╱
                              │ OUI
                              ▼
                  ┌───────────────────────────┐
                  │   MISE A JOUR DES NUMEROS  │
                  │ LOGIQUES EMETTEUR/RECEPTEUR│
                  └───────────────────────────┘
                              │
                              ▼
              ┌───────────────────────────────┐
              │ MISE A JOUR DES TABLES DE ROUTAGE │
              └───────────────────────────────┘
                              │
                              ▼
          NON             ╱METROLOGIE╲
   ◄─────────────────────  ╲ ACTIVE? ╱
                              │ OUI
                              ▼
                  ┌───────────────────────────┐
                  │   MISE A JOUR DES CONTEXTES│
                  │       DE METROLOGIE        │
                  └───────────────────────────┘
                              │
                              ▼
              ┌───────────────────────────────┐
              │ TRANSFERT DU PAQUET AU NIVEAU N4 │
              └───────────────────────────────┘
                              │
                              ▼
                         ( FIN N3 )
```

┌───────────────────┐
│   PROCEDURE DE     │
│     REPRISE        │
│                    │
│     RESEAU         │
└───────────────────┘

5

FIG.7

DEBUT N4

ANALYSE DU BLOC

COHERENCE PHYSIQUE DU PERIPHERIQUE?

NON — AUTORISATION REPRISE PHYSIQUE

OUI — COHERENCE LOGIQUE DU PERIPHERIQUE?

NON — OUI

PROCEDURE DE REPRISE PHYSIQUE DU PERIPHERIQUE

AUTORISATION REPRISE LOGIQUE

NON

PROCEDURE SATISFAITE?

PROCEDURE REPRISE LOGIQUE DU PERIPHERIQUE

MISE EN FAUTE DU PERIPHERIQUE

TRANSFERT DU BLOC AU NIVEAU N5

DEMANDE DE REEMISSION DU BLOC

FIN N4

6

FIG. 8

```
                              ┌──────────────┐
                              │  DEBUT N5    │
                              └──────┬───────┘
                                     │
                                     ▼
                    ┌────────────────────────────────┐
                    │   ANALYSE DE LA RESSOURCE       │
                    │   DU SERVICE DEMANDE            │
                    └────────────────┬───────────────┘
                                     │
                                     ▼
                    ┌────────────────────────────────┐
                    │   ANALYSE DES APPLICATIONS      │
                    │   DISPONIBLES DANS LE SYSTEME   │
                    └────────────────┬───────────────┘
                                     │
                                     ▼
                               ◇◇◇◇◇◇◇◇◇◇◇
              NON        ◇  APPLICATION    ◇
        ◀─────────────── ◇  DISPONIBLE?    ◇
        │                     ◇◇◇◇◇◇◇◇◇◇◇
        │                          │ OUI
        ▼                          ▼
┌───────────────┐      ┌────────────────────────────────┐
│ PROCEDURE DE  │      │   RECHERCHE APPLICATION ET      │
│   REPRISE     │      │   MISE A JOUR CONTEXTE          │
│               │      └────────────────┬───────────────┘
│  · SESSION    │                       │
└───────┬───────┘                       ▼
        │              ┌────────────────────────────────┐
        │              │   TRANSFERT AU NIVEAU N6        │
        │              └────────────────┬───────────────┘
        │                               │
        └───────────────────────────────┤
                                     ┌───┴───────┐
                                     │  FIN N5   │
                                     └───────────┘
```

FIG.9

DEBUT N6

ANALYSE CLASSE DE SERVICE

GESTION DE L'AUTOMATE
DE SERVICE

classe n

classe 2

classe 1

Traitement
classe n

Traitement
classe 1

FICHIERS DE TRADUCTIONS
ASSOCIES AUX DIFFERENTES
CLASSES.

TRAITEMENT DU NIVEAU N7
(APPLICATION)

FIN N6

8

10

34

34a

60

66

62

64

FIG. 10